# EUROPEAN PATENT APPLICATION

(11) **EP 2 843 516 A2**
(43) Date of publication of application: **04.03.2015**
(21) Application number: 14177975.1
(22) Date of filing: 22.07.2014
(51) Int. Cl.: G06F 3/041

(54) **Improved touch detection for a touch input device**

(30) Priority: 07.08.2013 JP 2013164299; 07.08.2013 JP 2013164300; 29.05.2014 JP 2014111229
(71) Applicant: Funai Electric Co., Ltd., Daito-shi Osaka 574-0013 (JP)
(72) Inventor: Arai, Kazuhiro, Daito-shi, Osaka 574-0013 (JP); Morita, Yoshimi, Daito-shi, Osaka 574-0013 (JP)
(74) Representative: Grünecker, Kinkeldey, Stockmair & Schwanhäusser

(57) **Abstract**

An input device comprises a sensor unit for detecting an approach and/or contact of a detected object on a detection surface, and a deciding unit for deciding, on the basis of the detected state of a plurality of detected objects detected by the sensor unit, a single point associated with input by the detected object. The deciding unit decides a single point associated with input by the detected object on the basis of at least one deciding mode, including a compound mode in which a single point on the detection surface is decided corresponding to the distances between the plurality of detected objects, and a priority mode in which the detected object to be preferentially selected is decided from among the plurality of detected objects.

## Description

### BACKGROUND OF THE INVENTION

### Field of the Invention

The present invention relates to an input device associated with a touch panel.

### Description of the Prior Art

Nowadays, input devices that utilize touch panels are used in a wide range of areas, such as smartphones, tablet terminals, portable game devices, POS terminals of retail stores, ticket machines of train stations, and ATM terminals of financial institutions. Among input devices that utilize touch panels, there are input devices capable of so-called three-dimensional input which detects the approach of a detected object in a normal direction of a detection surface of the touch panel.

The conventional input device disclosed in Japanese Patent Laid-Open No. 2012-9009 comprises a non-contact input unit (touch panel) having a capacitance-type proximity-sensing function. This non-contact input unit has a detection area provided to a location near the surface, and a non-detection area provided to a location adjacent to the detection area and further from the surface. Furthermore, a decision area is provided to a location nearest to the surface of the non-contact input unit within the detection area. When a user brings a finger, for example, near the surface of the non-contact input unit and then brings the finger near the decision area, the input device decides the position of the finger to be an input point.

The conventional input device disclosed in Japanese Patent Laid-Open No. 2012-512456 comprises a touch panel having a capacitance-type proximity-sensing function. This touch panel comprises a touch sensor pad for specifying the contact and position of a detected object such as a user's finger, and a proximity sensor pad for detecting the proximity of the detected object in the normal direction of the detection surface of the touch panel. The position touched by the user can thereby be accurately specified.

### SUMMARY OF THE INVENTION

However, a concern with the input device of Japanese Patent Laid-Open No. 2012-9009 is that when the user brings a finger near the surface of the touch panel and into the decision area in order to decide an input point, the finger might contact the surface of the touch panel. Also considered are cases in which a user would like to avoid finger contact and input on the surface of the touch panel in an input device that numerous unspecified people use, in which cases it would be difficult for the conventional input device described above to correspond.

A concern with the input device of Japanese Patent Laid-Open No. 2012-512456 is that in the detected object approaching the detection surface of the touch panel, a section not intended by the user might be specified as the detected object. For example, when the user attempts to input with a finger, there is a risk of the palm of the hand, the forearm, or the like being specified as the detected object. When the user attempts to input with an index finger, for example, there is a risk that the thumb, little finger, or the like could be specified as the detected object. This causes discrepancies in the detected locations, and there is a possibility that the input operation cannot be performed appropriately.

The present invention was devised in view of these points, and an object of the invention is to provide an input device that can decide an input point without a finger touching a detection screen such as a touch panel, and that can perform a suitable input operation.

Another object of the present invention is to provide an input device that can make it unlikely for a section not intended by the user to be specified as the detected object, and that can perform a suitable input operation.

To achieve the objects described above, an input device of the present invention comprises: a sensor unit for detecting an approach and/or contact of a detected object on a detection surface; and a deciding unit for deciding, on the basis of the detected state of a plurality of detected objects detected by the sensor unit, a single point associated with input by the detected object; the deciding unit deciding a single point associated with input by the detected object on the basis of at least one deciding mode, including a compound mode in which a single point on the detection surface is decided corresponding to the distances between the plurality of detected objects, and a priority mode in which the detected object to be preferentially selected is decided from among the plurality of detected objects.

In the input device of the above configuration, in the compound mode, after the sensor unit has detected the plurality of detected objects not in contact with the detection surface and the sensor unit has detected that the distance between at least two of the plurality of detected objects is shorter than a first predetermined distance established in advance, the deciding unit decides an input point, which is a single point on the detection surface selected using detection points on the detection surface corresponding to the plurality of detected objects that are within a distance shorter than the first predetermined distance and are not in contact with the detection surface.

In the compound mode of the input device of the above configuration, after the sensor unit has detected the plurality of detected objects not in contact with the detection surface and the sensor unit has detected that the distance between at least two of the plurality of detected objects is shorter than a second predetermined distance longer than the first predetermined distance and established in advance, the deciding unit gathers into a single point the detection points of the detection surface corresponding to the plurality of detected objects that are within a distance shorter than the second predetermined distance and are not in contact with the detection surface and sets this single point as an input point candidate, and when the sensor unit has detected that the distance between the plurality of detected objects that correspond to the input point candidate and that are not in contact with the detection surface is less than the first predetermined distance, the deciding unit decides the input point candidate of the detection surface to be the input point.

In the compound mode of the input device of the above configuration, after the deciding unit has set the input point candidate, and the sensor unit has detected that the distance between the detection surface and the plurality of detected objects that correspond to the input point candidate and that are not in contact with the detection surface is shorter than a third predetermined distance established in advance, the deciding unit puts the position of the input point candidate into a locked state where the position does not change even when the detected objects corresponding to the input point candidate shift within a predetermined range established in advance in a space from the detection surface up to the third predetermined distance.

In the input device of the above configuration, the input device comprises a storage unit that stores weighted correction values for specifying the detected object to be preferentially selected from among the plurality of detected objects in accordance with the relative positional relationship of the plurality of detected objects that have been detected simultaneously; and when, in the priority mode, the sensor unit simultaneously detects the plurality of detected objects, the deciding unit applies a weighted correction using the weighted correction values to a detection signal outputted and specifies the detected object to be preferentially selected from among the plurality of detected objects.

In the priority mode of the input device of the above configuration, when the detected objects are detected in a far location and a near location relative to the detection surface of the sensor unit, the weighted correction values include information for specifying the farther detected object as the detected object to be preferentially selected.

The palm of the hand is sometimes farther from the detection surface than the fingertip directly in front of the detection surface, such as when tap input or the like is performed on the detection surface, for example. However, the actualization of such a state depends on the input method (e.g. tapping, dragging, pinching in, pinching out, and the like) allowed by the content using the input device of the present invention, and the weighted correction values are therefore made to include those described below and are selected as appropriate corresponding to these input methods.

In the priority mode of the input device of the above configuration, the storage unit stores information associated with the user's dominant hand, and when a plurality of detected objects are detected along a direction substantially parallel with the detection surface of the sensor unit, the weighted correction values include information for specifying the detected object corresponding to the user's dominant hand as the detected object to be preferentially selected.

In the priority mode of the input device of the above configuration, when a plurality of detected objects in proximity to each other are detected, the weighted correction values include information for specifying, as the detected objects to be preferentially selected, the detected objects that of the plurality of detected objects are positioned farther toward the outer edge than the detected objects that of the plurality of detected objects are positioned in the middle.

In the priority mode of the input device of the above configuration, when groups of pluralities of detected objects in proximity to each other are detected, the weighted correction values include information for specifying, as the detected objects to be preferentially selected, the detected objects that are positioned in locations where the groups substantially face each other and locations where the distance between the groups is shortest.

In the priority mode of the input device of the above configuration, the weighted correction values include information corresponding to temporal shifting of the detected objects.

In the priority mode of the input device of the above configuration, when a plurality of detected objects is detected to be shifting with substantially the same time, in substantially the same direction, and at substantially the same speed, the weighted correction values include information for specifying, as the detected object to be preferentially selected, the detected object that of the plurality of detected objects is positioned in the lead in the shifting direction.

In the priority mode of the input device of the above configuration, when a plurality of groups of a plurality of detected objects in proximity to each other are detected to be shifting with substantially the same timing in different directions, the weighted correction values include information for specifying, as the detected objects to be preferentially selected, the detected objects positioned in locations where the distance between the plurality of groups is shortest.

In the priority mode of the input device of the above configuration, when a plurality of detected objects is detected to be shifting with substantially the same time, in substantially the same direction, and at different speeds, the weighted correction values include information for specifying, as the detected object to be preferentially selected, the detected object that of the plurality of detected objects shifts the fastest.

In the priority mode of the input device of the above configuration, the weighted correction values include time duration information for invalidating for a predetermined interval determinations associated with contact on or separation from the sensor unit by a detected object other than the detected object to be preferentially selected.

The significance and effects of the present invention will be made clearer by the description of the embodiments given below.

### BRIEF DESCRIPTION OF THE DRAWINGS

FIG. 1 is a configuration drawing showing an input device and a display device of the first embodiment of the present invention.
FIG. 2 is a block diagram of the input device of the first embodiment of the present invention.
FIG. 3 is a descriptive drawing showing a detected state of a detected object in the input device of the first embodiment of the present invention.
FIG. 4 is a descriptive drawing showing a decided state of an input point of the input device of the first embodiment of the present invention.
FIG. 5 is a flowchart showing the input point deciding process in the input device of the first embodiment of the present invention.
FIG. 6 is a descriptive drawing showing a state of setting an input point candidate in the input device of the second embodiment of the present invention.
FIG. 7 is a flowchart showing the input point deciding process in the input device of the second embodiment of the present invention.
FIG. 8 is a descriptive drawing showing a locked state of an input point candidate in an input device of the third embodiment of the present invention.
FIG. 9 is a descriptive drawing showing the process of locking an input point candidate in the input device of the third embodiment of the present invention.
FIG. 10 is a flowchart showing the input point deciding process of the input device of the third embodiment of the present invention.
FIG. 11 is a block diagram of an input device of a fourth embodiment of the present invention.
FIG. 12 is a descriptive drawing of a weighted correction process of the input device of the fourth embodiment of the present invention.
FIG. 13 is a descriptive drawing of weighted correction values of the input device of the fourth embodiment of the present invention.
F IU. 14 is a flowchart showing the weighted correction process of the input device of the fourth embodiment of the present invention.
FIG. 15 is a descriptive drawing of the weighted correction process of an input device of fifth embodiment of the present invention.
FIG. 16 is a descriptive drawing of the weighted correction process of an input device of a sixth embodiment of the present invention.
FIG. 17 is a descriptive drawing of the weighted correction process of an input device of a seventh embodiment of the present invention.
FIG. 18 is a descriptive drawing of the weighted correction process of an input device of an eighth embodiment of the present invention.
FIG. 19 is a descriptive drawing of the weighted correction process of an input device of a ninth embodiment of the present invention.
FIG. 20 is a descriptive drawing of the weighted correction process of an input device of a tenth embodiment of the present invention.
FIG. 21 is a descriptive drawing of the weighted correction process of an input device of an eleventh embodiment of the present invention.
FIG. 22 is a block diagram of an input device of a twelfth embodiment of the present invention.
FIG. 23 is a block diagram of an input device of a thirteenth embodiment of the present invention.

### DETAILED DESCRIPTION OF THE PREFERRED EMBODIMENTS

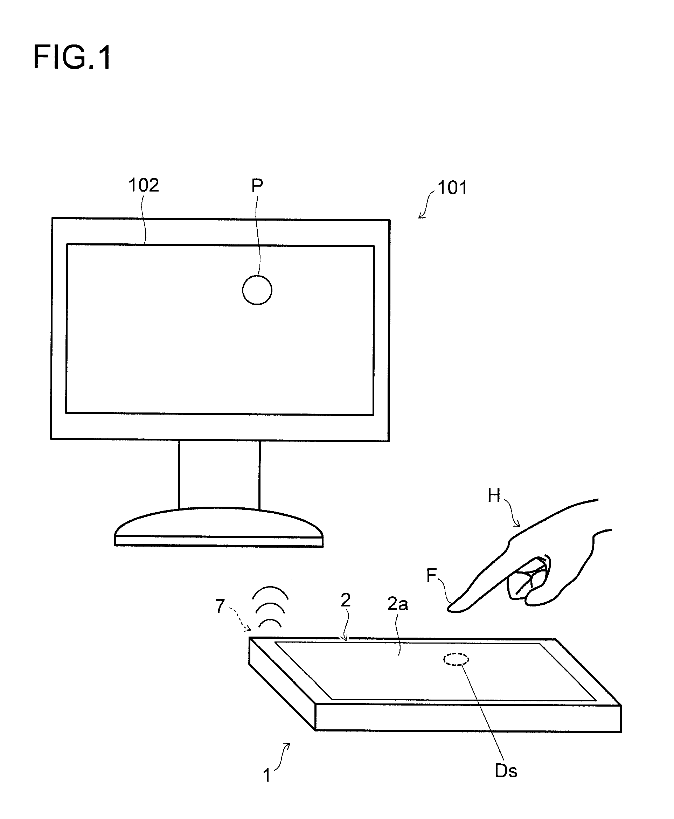

Embodiments of the present invention are described below based on FIGS. 1 to 23.

### <First Embodiment>

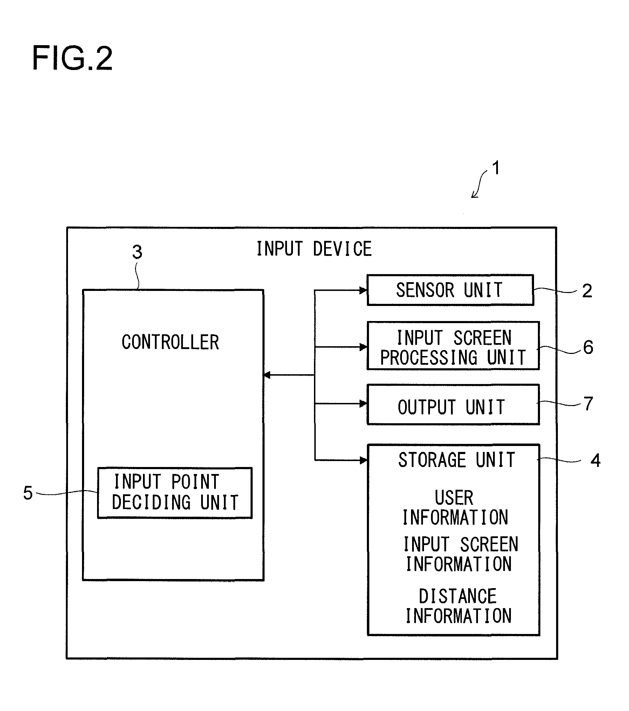

First, FIGS. 1 and 2 are used to describe the configuration of the input device of the first embodiment of the present invention. FIG. 1 is a configuration drawing showing the input device and a display device, and FIG. 2 is a block diagram of the input device.

The input device is an input device such as a remote controller for a user to operate, as desired, content depicted on a display unit 102 of a a display device 101 shown in FIG. 1, for example. The input device 1 comprises a sensor unit 2, a controller 3, a storage unit 4, an input point deciding unit 5, an input screen processing unit 6, and an output unit 7, as shown in FIGS. 1 and 2.

The sensor unit 2 is composed of a capacitance-type touch panel, for example, and is disposed on a desk or a floor surface, for example. The touch panel comprises a plurality of electrodes aligned on a surface in a predetermined array and a cover member for covering the electrodes. When a detected object such as a fingertip F of a hand H approaches the surface of the touch panel, i.e. the detection surface 2a, the capacitance of the electrodes corresponding to the detected object changes. The capacitance change, which occurs corresponding to the detection point indicating the approach and contact of the detected object on the detection surface 2a, is outputted as a detection signal by the sensor unit 2 composed of the touch panel.

The controller 3 is configured from a calculator (not shown) or another electronic component, and based on programs and data stored in advance and inputted in the storage unit 4 or the like, the controller obtains information from the configurative elements of the input device 1, controls the workings of the configurative elements, and executes a sequence of processes on the detected object, these being a detection process, a screen process, and an output process. The controller 3 comprises the input point deciding unit 5. The controller 3 is configured comprising the input point deciding unit 5 in this case, but the input point deciding unit 5 may also be configured separately from the controller 3.

The input point deciding unit 5 is a deciding unit for deciding, based on the detected state of a plurality of detected objects detected by the sensor unit 2, a single point associated with the inputs of the detected objects. The input point deciding unit 5 decides a single point associated with the inputs of the detected objects on the basis of a compound mode, in which a single point on the detection surface 2a is decided corresponding to the distances between a plurality of detected objects.

To be more detailed, the input point deciding unit 5 decides an input point, which is a single point that has been selected on the detection surface 2a, using detection points on the detection surface 2a corresponding to the detected objects that have been detected by the sensor unit 2 but that are not in contact with the detection surface 2a. The phrase "decides an input point" used herein means either that a finger or the like is in contact with a single point during a tap input or a drag input, for example, or that a mouse used as a pointing device has clicked.

When an input point is decided, after the sensor unit 2 has detected a plurality of detected objects not in contact with the detection surface 2a and also when the sensor unit 2 has detected that the distance between at least two of the plurality of detected objects is shorter than a first predetermined distance that has been established in advance, the input point deciding unit 5 decides an input point, which is a single point that has been selected on the detection surface 2a, using detection points corresponding to the plurality of detected objects that are within the distance shorter than the first predetermined distance and that are not in contact with the detection surface 2a. The first predetermined distance is stored in advance in the storage unit 4.

In addition to distance information including the first predetermined distance associated with the positional relationship of the detected objects, the storage unit 4 stores user information and input screen information. The user information includes information such as the user's dominant hand and the user's input habits using that hand, for example. The input screen information includes information such as the orientation (toward the ceiling) of the display unit 102 of the display device 101, for example. When deciding the input point, the input point deciding unit 5 sometimes uses the user information and the input screen information as well as the distance information associated with the detected object positions and the like.

The user also may, for example, implement an input method such as tapping or dragging on the detection surface 2a of the sensor unit 2 in advance, information storing habits or tendencies associated with that operation may be used to set the input point or position information for an input point candidate, described hereinafter, as the user information.

The input screen processing unit 6 create an image signal associated with screen data for drawing the input point of the detection surface 2a of the sensor unit 2 on the screen of the display unit 102. When this image signals is created, the input screen processing unit 6 acquires the information associated with the input point specified by the input point deciding unit 5, and acquires the input screen information from the storage unit 4.

The output unit 7 outputs to the exterior an image signal associated with the input screen acquired from the input screen processing unit 6. The output signal of the output unit 7 is sent to the display device 101 by a wired correction or wirelessly such as infrared rays, for example. The display device 101 outputs image data based on the output signal of the output unit 7 to the display unit 102.

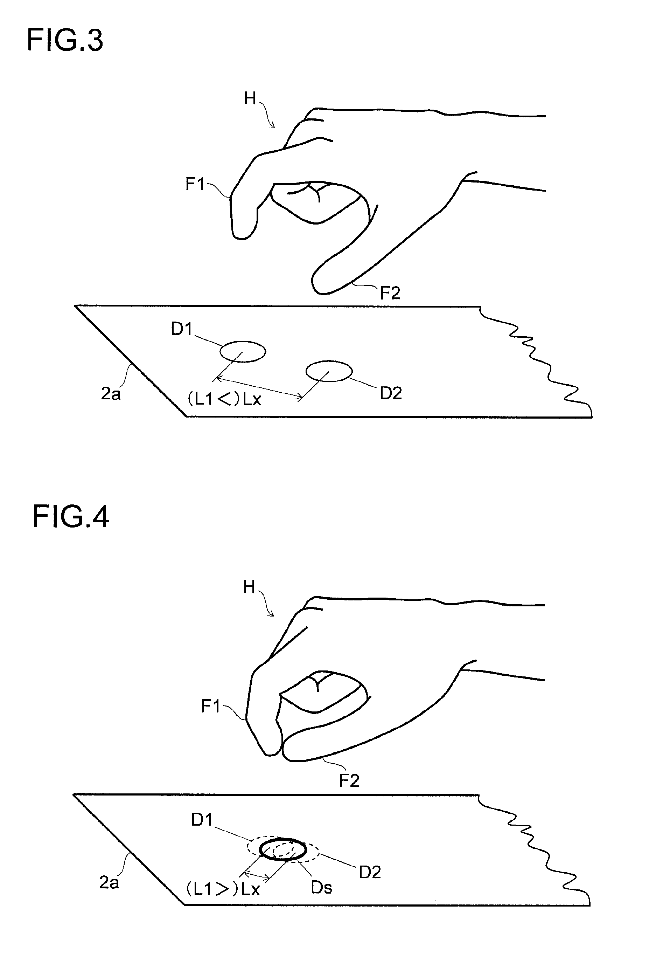

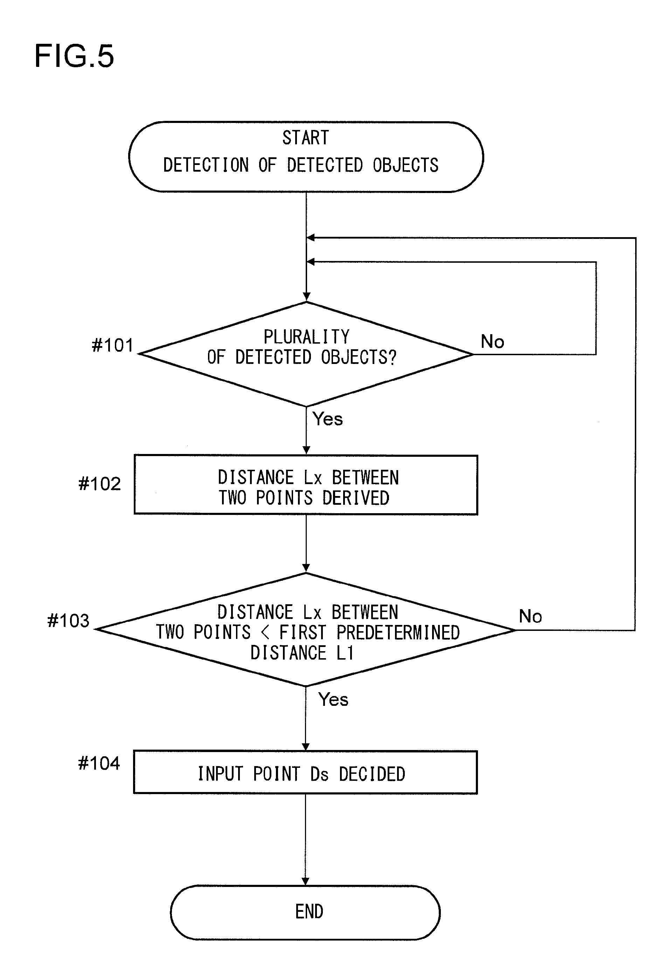

Next, using FIG. 1 as well as FIGS. 3 and 4, the input point deciding process that uses the input device 1 is described along with the flow shown in FIG. 5. FIG. 3 is a descriptive drawing showing a detected state of detected objects. FIG. 4 is a descriptive drawing showing a decided state of an input point, and FIG. 5 is a flowchart showing the input point deciding process.

This description uses an example of input in which a single point on the screen of the display unit 102 (see FIG. 1) is selected using the input device 1, for example.

In the case of input in which a single point on the screen of the display unit 102 is selected using the input device 1, the user brings fingertips (e.g. the index finger F1 and thumb F2) of the hand H near the detection surface 2a of the sensor unit 2 composed of a touch panel, as shown in FIG. 3, for example. The sensor unit 2 thereby detects, as the detected objects, a plurality of locations of the index finger F1 and the thumb F2 while they are not in contact with the detection surface 2a. At this time, a detection point D1 corresponding to the index finger F1 and a detection point D2 corresponding to the thumb F2 are detected on the detection surface 2a.

When the sensor unit 2 detects detected objects that are not in contact with the detection surface 2a (the start of FIG. 5), the controller 3 distinguishes whether or not there is a plurality of detected objects, i.e. detection points (step #101). When there is one detected object (No in step #101), the controller 3 again distinguishes whether or not there is a plurality of detected objects.

When there are two detected objects (Yes in step #101) as shown in FIG. 3, the controller 3 causes the input point deciding unit 5 to derive a distance Lx between the detection point D1 corresponding to the index finger F1 and the detection point D2 corresponding to the thumb F2 (step #102).

Next, the input point deciding unit 5 distinguishes whether or not the distance Lx between the detection points D1, D2 is shorter than a first predetermined distance L1 (step #103). The first predetermined distance L1 is established in advance and stored in the storage unit 4 as previously described. When the distance Lx between the detection points D1, D2 is equal to or greater than the first predetermined distance L1 (No in step #103), the process returns to step #101 and whether or not there is a plurality of detected objects is again distinguished.

When the user brings the index finger F1 and the thumb F2 closer together and the distance Lx between the detection points D1, D2 becomes shorter than the first predetermined distance L1 as shown in FIG. 4 (Yes in step #103), the input point deciding unit 5 uses the detection points D1, D2 corresponding to the index finger F1 and the thumb F2 not in contact with the detection surface 2a to decide an input point Ds which is a single point selected on the detection surface 2a (step #104).

At this time, a point positioned in the middle between the detection points D1, D2 is decided as the input point Ds in the present embodiment as shown in FIG. 4, but either one of the detection points D1, D2 may be decided as the input point Ds. Instead of being decided from the detection points D1, D2 and the middle thereof, the positional condition of the input point Ds may be automatically decided statistically from data associated with multiple inputs.

The controller 3 then ends the input point deciding process (the end of FIG. 5). In the input point deciding process described using FIG. 5, when the user withdraws the hand H away from the detection surface 2a of the sensor unit 2 while the input point Ds has yet to be decided in step #104, the process ends midway through.

The input screen processing unit 6 then acquires input screen information and information associated with the input point Ds, and creates an image signal associated with image data for drawing the input point Ds on the screen of the display unit 102. The output unit 7sends to the display device 101 the image signal associated with the image data received from the input screen processing unit 6.

The display device 101 displays a pointer P corresponding to the input point Ds on the display unit 102 (see FIG. 1). At this time, when the content provides a selection target such as a key, button, image, file, or data, for example, to a location corresponding to a pointer P, the selection target is selected based on the input point deciding process of the input device 1 described above.

As described above, the input device 1 of the embodiment of the present invention comprises: a sensor unit 2 for outputting a detection signal corresponding to a detection point indicating the approach of a detected object toward a detection surface 2a; and an input point deciding unit 5 which, after the sensor unit 2 has detected a plurality of detected objects, e.g. an index finger F1 and a thumb F2 that are not in contact with the detection surface 2a and also when the sensor unit 2 has detected that a distance Lx between the index finger F1 and the thumb F2 is shorter than a first predetermined distance L1, uses detection points D1, D2 corresponding to the index finger F1 and thumb F2 which are within the distance Lx shorter than the first predetermined distance L1 and which are not in contact with the detection surface 2a to decide an input point Ds which is a single point selected on the detection surface 2a.

According to this configuration, when the user brings the index finger F1 and the thumb F2 within a distance Lx shorter than the first predetermined distance L1 above the detection surface 2a, the input device 1 uses the detection points D1, D2 corresponding to the index finger F1 and the thumb F2 not in contact with the detection surface 2a to decide an input point Ds which is a single point selected on the detection surface 2a. Therefore, the input device 1 can decide an input point even if the user does not bring any fingers in contact with the detection surface 2a of the sensor unit 2.

### <Second Embodiment>

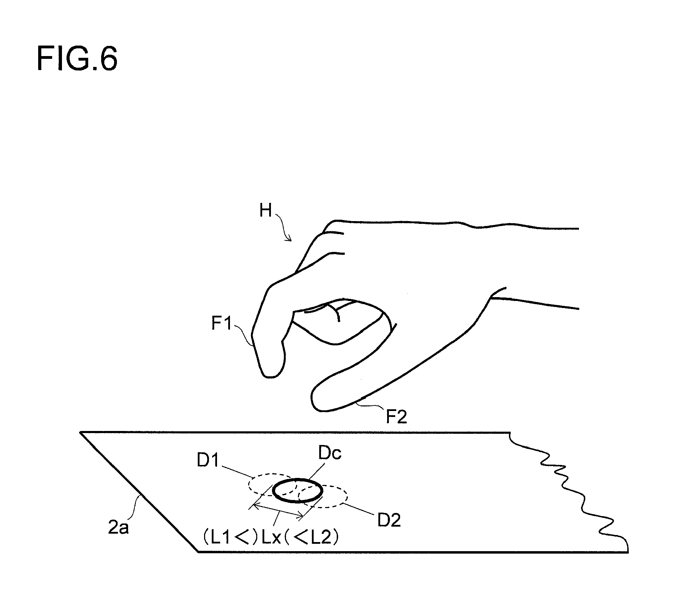

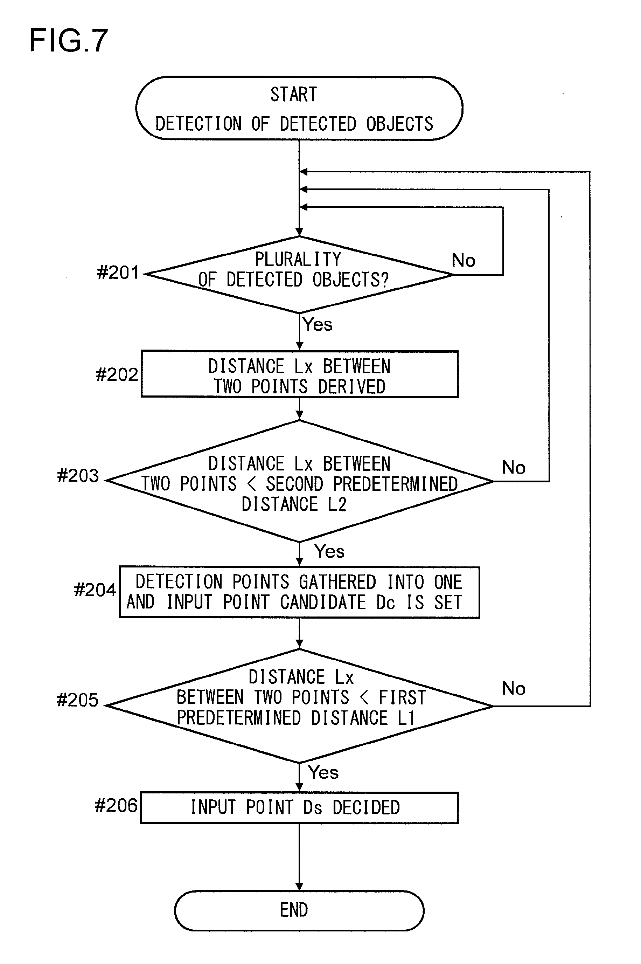

Next, the configuration of an input device of a second embodiment of the present invention is described, using FIGS. 6 and 7. FIG. 6 is a descriptive drawing showing a state of setting an input point candidate in the input device, and FIG. 7 is a flowchart showing the input point deciding process. Because the essential configuration of this embodiment is the same as that of the first embodiment previously described, configurative elements common to the first embodiment are denoted by the same symbols as before and are not described. The flowchart shown in FIG. 7 has partially the same configuration as the flowchart shown in FIG. 5, and part of the description thereof is therefore omitted.

In the second embodiment, prior to deciding an input point, the input point deciding unit 5 sets an input point candidate which can be decided later as an input point.

When the input point deciding unit 5 sets an input point candidate, after the sensor unit 2 has detected a plurality of detected objects that are not in contact with the detection surface 2a and also when the sensor unit 2 has detected that the distance between at least two of the plurality of detected objects is shorter than a second predetermined distance that is longer than a first predetermined distance, both distances having been established in advance, the input point deciding unit 5 sets an input point candidate by gathering the detection points, which correspond to the plurality of detected objects that are not in contact with the detection surface 2a and that are within a distance shorter than the second predetermined distance, into a single point. The second predetermined distance is stored in advance in the storage unit 4.

The input point deciding unit 5 then decides the input point candidate on the detection surface 2a to be an input point when the sensor unit 2 has detected that the distance between the plurality of detected objects not in contact with the detection surface 2a corresponding to the input point candidate is shorter than the first predetermined distance.

To describe in detail using FIGS. 6 and 7, when the sensor unit 2 detects two detected objects, the index finger F1 and the thumb F2, the input point deciding unit 5 distinguishes whether or not the distance Lx between the detection points D1, D2 corresponding to the index finger F1 and the thumb F2 is shorter than a second predetermined distance L2 (step #203 in FIG. 7). The second predetermined distance L2 is established in advance and stored in the storage unit 4 as previously described. When the distance Lx between the detection points D1, D2 is equal to or greater than the second predetermined distance L2 (No in step #203), the process returns to step #201 and whether or not there is a plurality of detected objects is again distinguished.

When the user brings the index finger F1 and the thumb F2 closer together and the distance Lx between the detection points D1, D2 is shorter than the second predetermined distance L2 (Yes in step #203) as shown in FIG. 6, the input point deciding unit 5 gathers the detection points D1, D2 into a single point and sets an input point candidate Dc (step #204).

In the present embodiment at this time, a point positioned between the detection points D1, D2 is set as a input point candidate Dc as shown in FIG. 7, but either one of the detection points D1, D2 may be set as the input point candidate Dc. Instead of being set from the detection points D1, D2 and the middle, thereof, the positional condition of the input point candidate Dc may be automatically statistically from data associated with multiple inputs.

Next, the input point deciding unit 5 distinguishes whether or not the distance Lx between the detection points D1, D2 is shorter than the first predetermined distance L1 (step #205). The first predetermined distance L1, which is shorter than the second predetermined distance L2, is established in advance and stored in the storage unit 4. When the distance Lx between the detection points D1, D2 is equal to or greater than the first predetermined distance L1 (No in step #205), the process returns to step #201 and whether or not there is a plurality of detected objects is again distinguished.

When the user brings the index finger F1 and the thumb F2 closer together and the distance Lx between the detection points D1, D2 is shorter than the first predetermined distance L1 (Yes in step #205), the input point deciding unit 5 decides the input point candidate Dc of the detection surface 2a to be an input point Ds (step #206).

The controller 3 then ends the input point deciding process (the end in FIG. 7). In the input point deciding process described using FIG. 7, when the user withdraws the hand H away from the detection surface 2a of the sensor unit 2 while the input point Ds has yet to be decided in step #206, the process ends midway through.

As described above, after the sensor unit 2 has detected a plurality of detected objects, e.g. the index finger F1 and the thumb F2 that are not in contact with the detection surface 2a and also when the sensor unit 2 has detected that the distance Lx between the index finger F1 and the thumb F2 is shorter than the second predetermined distance L2 which is longer than the first predetermined distance L1 and established in advance, the input point deciding unit 5 gathers the detection points D1, D2, which correspond to the index finger F1 and the thumb F2 which are not in contact with the detection surface 2a and are within a distance Lx shorter than the second predetermined distance L2, into a single point and sets this point as an input point candidate Dc; and when the sensor unit 2 has detected that the distance Lx between the index finger F1 and the thumb F2, which correspond to the input point candidate Dc and which are not in contact with the detection surface 2a, is shorter than the first predetermined distance L1, the input point deciding unit 5 decides the input point candidate Dc on the detection surface 2a to be an input point Ds.

According to this configuration, when the user brings the index finger F1 and the thumb F2 within a distance Lx shorter than the second predetermined distance L2 above the detection surface 2a, the input device 1 gathers the detection points D1, D2, which correspond to the index finger F1 and the thumb F2 not in contact with the detection surface 2a, into a single point and sets this point as an input point candidate Dc, Furthermore, when the user brings the index finger and the thumb F2, which are not in contact with the detection surface 2a, within a distance Lx shorter than the first predetermined distance L1, the input device 1 decides the input point candidate Dc to be an input point Ds. Therefore, an input point Ds is decided on a step-by-step basis without contact, and operability can be improved.

### <Third Embodiment>

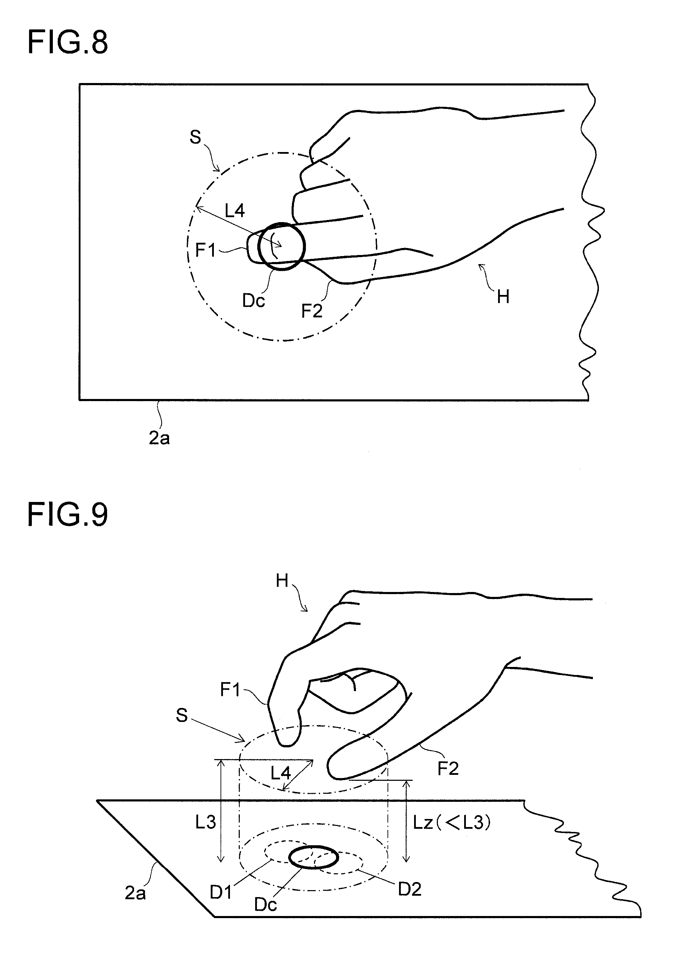

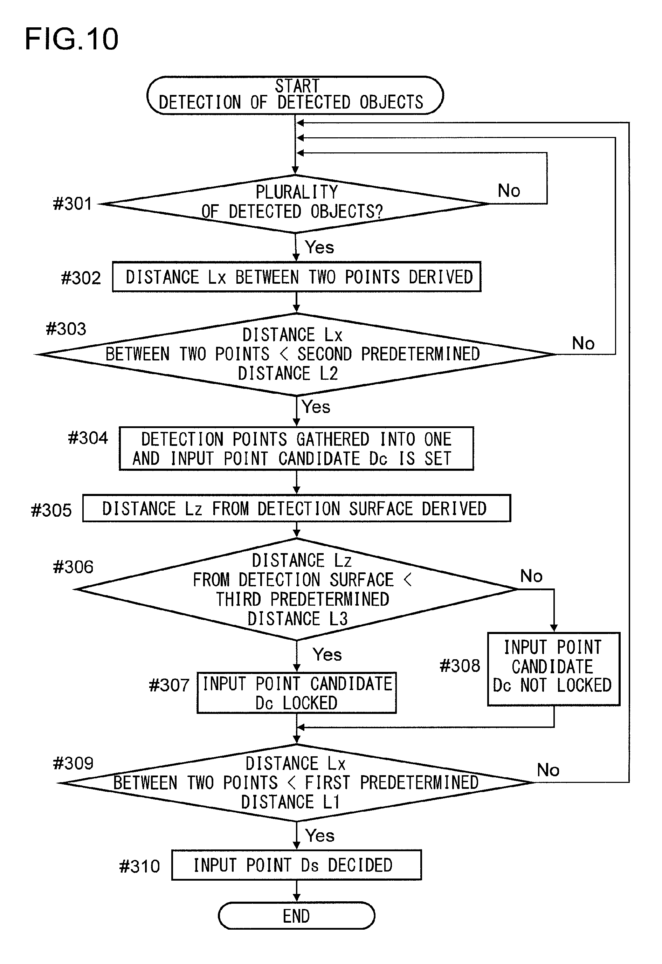

Next, the configuration of an input device of a third embodiment of the present invention will be described using FIGS. 8 to 10. FIG. 8 is a descriptive drawing showing a locked state of an input point candidate, FIG. 9 is a descriptive drawing showing the process of locking an input point candidate in the input device, and FIG. 10 is a flowchart showing the input point deciding process. Because the essential configuration of this embodiment is the same as those of the first embodiment and second embodiment previously described, configurative elements common to these embodiments are denoted by the same symbols as before and are not described. The flowchart shown in FIG. 10 has partially the same configuration as the flowcharts shown in FIGS. 5 and 7, and part of the description thereof is therefore emitted.

In the third embodiment, a locking process is performed on an input point candidate that the input point deciding unit 5 can later decide to be an input point. The term "input point candidate locking process" means that after an input point candidate has been set, the position of the input point candidate Dc is put into a locked state in which the position does not change even if the hand H, the index finger F1, or the thumb F2 shifts within a predetermined area S (within a column of a radius L4 and a height L3, for example) established in advance in a space from the detection surface 2a to a third predetermined distance L3 established in advance, as shown in FIGS. 8 and 9. The predetermined area S is not limited to a columnar shape, and may be configured as another shape.

When the locking process is performed on an input point candidate, after the input point deciding unit 5 has set the input point candidate, the position of the input point candidate is put into a locked state in which the position does not change even if the detected objects corresponding to the input point candidate shift within a predetermined area established in advance in a space from the detection surface 2a to the third predetermined distance when the sensor unit 2 has detected that the distance between the detection surface 2a and the plurality of detected objects, which correspond to the input point candidate and which are not in contact with the detection surface 2a, is shorter than the third predetermined distance established in advance. The third predetermined distance and the predetermined area are stored in advance in the storage unit 4.

To give a detailed description using FIGS. 8 to 10, when the sensor unit 2 detects that the distance Lx between the detection points D1 D2, which correspond to the two detected objects, the index finger F1 and the thumb F2, is shorter than the second predetermined distance L2 (Yes in step #303 in FIG. 10), the input point deciding unit 5 gathers the detection points D1, D2 into a single point and sets an input point candidate Dc (step #304).

Next, the input point deciding unit 5 derives a distance Lz between the detection surface 2a and the index finger F1 or thumb F2, i.e. the height Lz from the detection surface 2a to the index finger F1 or thumb F2, which correspond to the input point candidate Dc and which are not in contact with the detection surface 2a, as shown in FIG. 9 (step #305).

Next, the input point deciding unit 5 distinguishes whether or not the distance Lz between the detection surface 2a and the index finger F1 or thumb F2 is shorter than the third predetermined distance L3 (step #306). The third predetermined distance L3 is established in advance and stored in the storage unit 4 as previously described. When the distance Lz between the detection surface 2a and the index finger F1 or thumb F2 is shorter than the third predetermined distance L3 (Yes in step #306), the input point deciding unit 5 puts the position of the input point candidate Dc in a locked state (step #307).

The input point deciding unit 5 does not change the position of the locked input point candidate Dc even if the index finger F1 or thumb F2 corresponding to the input point candidate Dc shifts within the predetermined area S (within a column of a radius L4 and a height L3, for example) established in advance in a space from the detection surface 2a to the third predetermined distance L3, as shown in FIG. 8 The predetermined area S is established in advance and stored in the storage unit 4 as previously described. When the index finger F1 or thumb F2 is thereafter shifted beyond the predetermined area S, the input point deciding unit 5 releases the lock on the input point candidate Dc.

In step #306, when the distance Lz between the detection surface 2a and the index finger F1 or thumb F2 is equal to or greater than the third predetermined distance L3 (No in step #306), the input point deciding unit 5 does not lock the position of the input point candidate Dc (step #308). When the position of the input point candidate Dc has already been locked, and the index finger F1 or thumb F2 then rises away from the detection surface 2a and the distance Lz between the detection surface 2a and the index finger F1 or thumb F2 becomes equal to or greater than the third predetermined distance L3, the input point deciding unit 5 releases the lock on the position of the input point candidate Dc.

Next, the input point deciding unit 5 distinguishes whether or not the distance Lx between the detection points D1, D2 is shorter than the first predetermined distance L1 (step #309). The first predetermined distance L1 is established in advance and stored in the storage unit 4. When the distance Lx between the detection points D1, D2 is equal to or greater than the first predetermined distance L1 (No in step #309), the process returns to step #301 and whether or not there is a plurality of detected objects is again distinguished.

When the user brings the index finger F1 and the thumb F2 closer together and the distance Lx between the detection points D1, D2 becomes shorter than the first predetermined distance L1 (Yes in step #309), the input point deciding unit 5 decides the input point candidate Dc on the detection surface 2a to be an input point Ds (step #310).

The controller 3 then ends the input point deciding process (the end in FIG. 10). In the input point deciding process described using FIG. 10, when the user does something such as withdrawing the hand H away from the detection surface 2a of the sensor unit 2, for example, while the input point Ds has yet to be decided in step #310, the process ends midway through.

As described above, after the input point deciding unit 5 has set the input point candidate Dc and also when the sensor unit 2 detects that the distance Lz between the detection surface 2a and the index finger F1 or thumb F2, which correspond to the input point candidate Dc and which are not in contact with the detection surface 2a, is shorter than the third predetermined distance L3 established in advance, the input point deciding unit 5 puts the position of the input point candidate Dc into a locked state in which the position does not change even if the index finger F1 or thumb F2 corresponding to the input point candidate Dc shifts within the predetermined area S established in advance in the space from the detection surface 2a to the third predetermined distance L3.

According to this configuration, after an input point candidate Dc has been set by the index finger F1 and the thumb F2 of the user, the input point candidate Dc does not change even if the user moves the index finger F1 or thumb F2 within the predetermined area S. Specifically, when the index finger F1 or thumb F2 is moved in order to decide the input point candidate Dc as an input point Ds, if the hand H is moved unintentionally, the input point Ds remains as decided if the hand movement is within the predetermined area S. Therefore, the operability associated with deciding the input point Ds without contact can be further improved.

### <Fourth Embodiment>

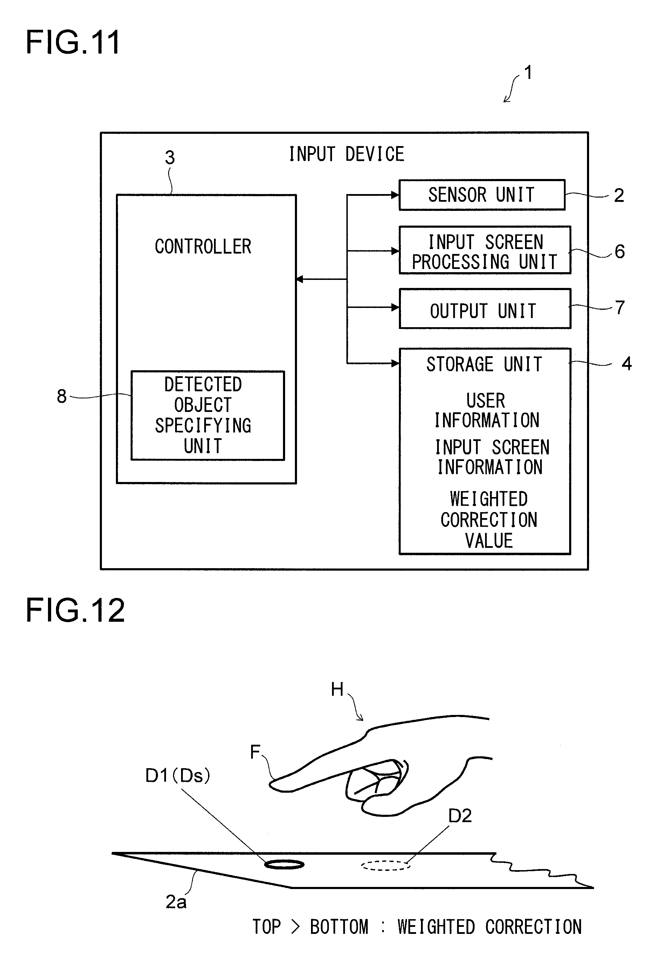

Next, the configuration of an input device of a fourth embodiment of the present invention will be described using FIG. 1 as well as FIG. 11. FIG. 11 is a block diagram of the input device.

The input device 1 is an input device such as a remote controller for the user to arbitrarily operate the content drawn on the display unit 102 of the display device 101 shown in FIG. 1, for example. The input device 1 comprises a sensor unit 2, a controller 3, a storage unit 4, a detected object specifying unit 8, an input screen processing unit 6, and an output unit 7, as shown in FIGS. 1 and 11.

The sensor unit 2 is composed of a capacitance-type touch panel, for example, and is disposed on a desk or a floor surface, for example. The touch panel comprises a plurality of electrodes aligned on a surface in a predetermined array and a cover member for covering the electrodes. When a detected object such as a fingertip F of a hand H approaches the surface of the touch panel, i.e. the detection surface 2a, the capacitance of the electrodes corresponding to the detected object changes. The capacitance change, which occurs corresponding to the detection point indicating the approach and contact of the detected object on the detection surface 2a, is outputted as a detection signal by the sensor unit 2 composed of the touch panel.

The controller 3 is configured from a calculator (not shown) or another electronic component, and based on programs and data stored in advance and inputted in the storage unit 4 or the like, the controller obtains information from the configurative elements of the input device 1, controls the workings of the configurative elements, and executes a sequence of processes on the detected object, these being a detection process, a screen process, and an output process. The controller 3 comprises the detected object specifying unit 8. The controller 3 is configured comprising the detected object specifying unit 8 in this case, but the detected object specifying unit 8 may also be configured separately from the controller 3.

The detected object specifying unit 8 is a deciding unit for deciding, based on the detected state of a plurality of detected objects detected by the sensor unit 2, a single point associated with the inputs of the detected objects. The detected object specifying unit 8 decides a single point associated with the inputs of the detected objects on the basis of a priority mode for deciding a detected object to be preferentially selected from among a plurality of detected objects.

To be more detailed, the detected object specifying unit 8 specifies a detected object to be preferentially selected from among a plurality of detected objects when the sensor unit 2 has simultaneously detected a plurality of detected objects. When the detected object specifying unit 8 specifies a detected object to be preferentially selected from among a plurality of detected objects, a weighted correction value stored in advance in the storage unit 4 is used. The detected object specifying unit 8 applies a weighted correction using the weighted correction value to a detection signal associated with the plurality of detected objects outputted by the sensor unit 2.

The weighted correction value is information for specifying the detected object to be preferentially selected from among a plurality of detected objects, according to the relative positional relationship of the plurality of detected objects that have been detected simultaneously. The weighted correction value includes many variations corresponding to the input method allowed by the content drawn on the display unit 102 of the display device 101 being operated by the user, and the weighted correction value is automatically selected as appropriate based on the input method.

The storage unit 4 stores user information and input screen information in addition to weighted correction values. The user information includes information such as the user's dominant hand and the user's input habits using that hand, for example. The input screen information includes information such as the orientation (toward the ceiling) of the display unit 102 of the display device 101, the input method allowed by the content drawn on the display unit 102, and the number of input points (the number of detected objects to be specified), for example. The input methods allowed by the content include input methods such as tapping, dragging, pinching in, and pinching out, for example. The number of input points during a tap or drag is usually one, and there are usually a plurality of input points during a pinch in or a pinch out. When performing a weighted correction, the detected object specifying unit 8 sometimes uses the user information and the input screen information as well as the weighted correction value,

The user may, for example, carry out input methods such as tapping, dragging, pinching in, and pinching out in advance on the detection surface 2a of the sensor unit 2, and weighted correction values may be created and used from information storing trends associated with these operations.

The input screen processing unit 6 creates an image signal associated with image data for drawing the input point (the specified detected object), which is on the detection surface 2a of the sensor unit 2, on the screen of the display unit 102. When creating this image signal, the input screen processing unit 6 acquires information associated with the input point specified by the detected object specifying unit 8, and acquires input screen information from the storage unit 4.

The output unit 7 outputs to the exterior an image signal associated with the input screen acquired from the input screen processing unit 6. The output signal of the output unit 7 is sent to the display device 101 by a wired correction or wirelessly such as infrared rays, for example. The display device 101 outputs image data based on the output signal of the output unit 7 to the display unit 102.

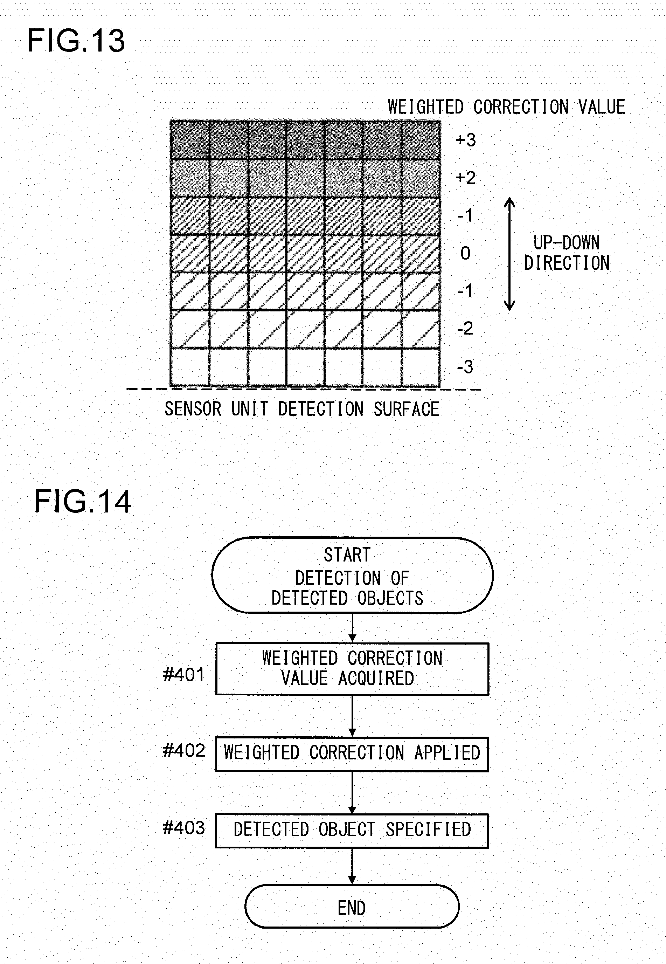

Next, the weighted correction process, which is for specifying the detected object to be preferentially selected from among the plurality of detected objects detected by the sensor unit 2, is described along the flow shown in FIG. 14, using FIGS. 12 and 13 as well. FIG. 12 is a descriptive drawing of the weighted correction process, FIG. 13 is a descriptive drawing of weighted correction values, and FIG. 14 is a flowchart showing the weighted correction process.

The description uses an example of drag input in which the number of input points is one, for example, as the input method allowed by the content. In the case of drag input, the user brings a fingertip F (e.g. the index finger) of a hand H near the detection surface 2a of the sensor unit 2 composed of the touch panel as shown in FIG. 12, for example. This results in cases in which the sensor unit 2 detects a plurality of locations, including the fingertip F and other parts of the hand H, as detected objects. At this time, a detection point D1 corresponding to the fingertip F and a detection point D2 corresponding to another part of the hand H are detected on the detection surface 2a.

When the sensor unit 2 detects a plurality of detected objects (the start in FIG. 14), the controller 3 acquires a weighted correction value from the storage unit 4 (step #401). The weighted correction value is selected automatically based on the input method being drag input.

The weighted correction values in the case of drag input are as shown in FIG. 13, for example. The weighted correction values are weighted in the up-down direction (a normal direction) relative to the detection surface 2a of the sensor unit 2, and the weighted correction values increase as the detected objects move upward further away from the detection surface 2a. The grayscale drawn in FIG. 13 is a schematic expression showing the magnitudes of the weighted correction values in a visually easily understandable manner, and in actuality, the storage unit 4 stores weighted correction values composed of numerical value information listed on the right as examples.

Next, the detected object specifying unit 8 applies weighted corrections using the weighted correction values to the detection signals associated with the detection points D1, D2 corresponding to the plurality of detected objects outputted by the sensor unit 2 (step #402). Because the weighted correction values increase as the detected objects move upward further away from the detection surface 2a as shown in FIG. 13, the fingertip F positioned at the top and corresponding to the detection point D1 is prioritized in the weighted correction above any other part of the hand H positioned at the bottom and corresponding to the detection point D2.

In cases in which a combination of multiple weighted corrections is applied as described later in other embodiments, the process of steps #401 to #402 is repeated.

Thus, the detected object specifying unit 8 specifies the fingertip F as a detected object to be preferentially selected (step #403). The controller 3 then ends the weighted correction process for specifying a detected object to be preferentially selected from among the plurality of detected objects (the end in FIG. 14).

The controller 3 then sets the detection point D1, which corresponds to the fingertip F specified as the detected object to be preferentially selected, as an input point Ds of the drag input by the user. The input screen processing unit 6 acquires input screen information and information associated with the input point Ds, and creates an image signal associated with image data for drawing the input point Ds on the screen of the display unit 102. The output unit 7 sends to the display device 101 an image signal associated with the input screen received from the input screen processing unit 6. The display device 101 displays a pointer P corresponding to the input point Ds on the display unit 102 (see FIG. 1).

As described above, the input device 1 of the fourth embodiment comprises: a sensor unit 2 for outputting a detection signal corresponding to the approach and contact of a detected object on a detection surface 2a; a storage unit 4 that stores weighted correction values for specifying a detected object to be preferentially selected from among the fingertip F and other parts of the hand H, in accordance with the relative positional relationship between the fingertip F and other parts of the hand H which are a plurality of detected objects detected simultaneously; and a detected object specifying unit 8 for applying weighted corrections using the weighted correction values to the detection signals outputted when the sensor unit 2 simultaneously detects a plurality of detected objects and specifying the detected object to be preferentially selected from among the plurality of detected objects. The fingertip F is thereby specified as the detected object to be preferentially selected from among the fingertip F and the other parts of the hand H in accordance with the relative positional relationship between the fingertip F and other parts of the hand H detected simultaneously. Therefore, it is possible to make it unlikely that parts not intended by the user would be specified as a detected object.

The weighted correction value includes information for specifying the fingertip F as the detected object to be preferentially selected, the finger being the farther (up) detected object when detected objects are detected in two locations, far and near, in the up-down direction relative to the detection surface 2a of the sensor unit 2. According to this configuration, when the user attempts to designate a single point on the detection surface 2a of the sensor unit 2 and the fingertip F and other parts of the hand H of the user are detected as detected objects, the fingertip F of the user is readily specified as the detected object to be preferentially selected.

### <Fifth Embodiment>

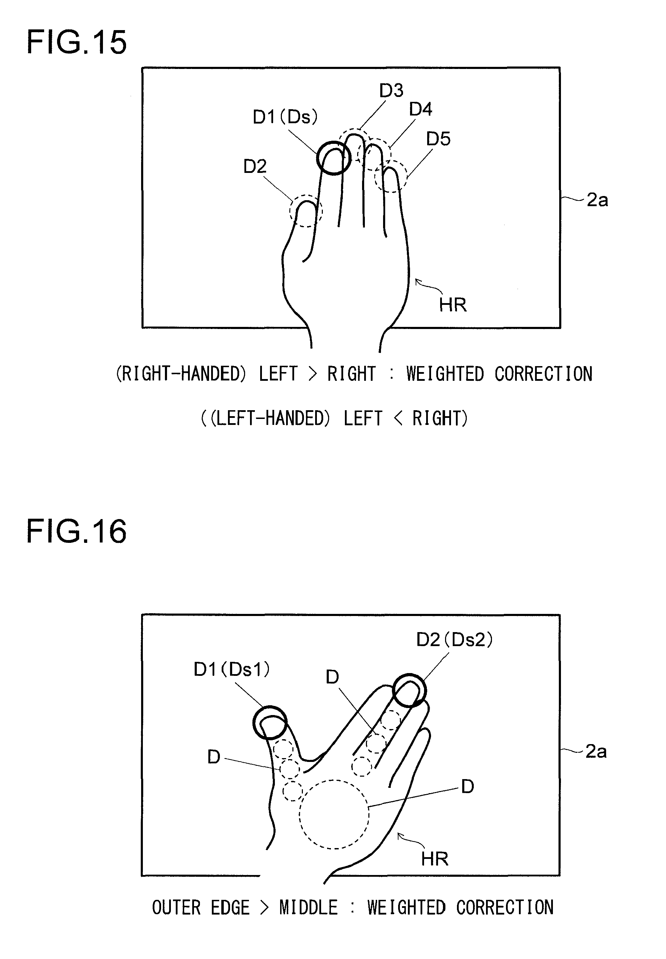

Next, the configuration an input device of a fifth embodiment of the present invention is described using FIG. 15. FIG. 15 is a descriptive drawing of the weighted correction process of the input device. Because the essential configuration of this embodiment is the same as that of the fourth embodiment previously described, configurative elements common to the fourth embodiment are denoted by the same symbols as before and are not described. FIG. 15 depicts a state of looking. downward from above onto the detection surface 2a of the sensor unit 2.

In the fifth embodiment, the description uses an example of tap input in which the number of input points is one, for example, as the input method allowed by the content. In the case of tap input, the user brings the hand H near so that the palm surface of the hand is substantially parallel to the detection surface 2a of the sensor unit 2 composed of the touch panel, as shown in FIG. 15, for example. This results in cases in which the sensor unit 2 detects, as the detected objects, detection points D1 to D5 in a plurality of locations composed of the five fingertips.

The weighted correction process in this case uses user information in addition to the weighted correction values of the storage unit 4, for example. Based on the user information, when the user is right-handed, for example, the weighted correction values are set so that the detected objects on the left side of the palm of the hand are larger. When the user is left-handed, the weighted correction values are set so that the detected objects on the right side of the palm of the hand are larger.

The detected object specifying unit 8 specifies a fingertip (of the index finger, for example) corresponding to the detection point D1 as the detected object to be preferentially selected. The controller 3 then sets the detection point D1, which corresponds to the fingertip specified as the detected object to be preferentially selected, as the input point Ds of the tap input by the user.

As described above, the weighted correction values include information for specifying the detected object corresponding to the user's dominant hand as the detected object to be preferentially selected when a plurality of detected objects composed of the five fingertips are detected along a direction substantially parallel with the detection surface 2a of the sensor unit 2. According to this configuration, when the user attempts to designate a single point on the detection surface 2a of the sensor unit 2 and the user's five fingers are detected as detected objects, a predetermined fingertip corresponding to the user's dominant hand is readily specified as the detected object to be preferentially selected.

### <Sixth Embodiment>

Next, the configuration an input device of a sixth embodiment of the present invention is described using FIG. 16. FIG. 16 is a descriptive drawing of the weighted correction process of the input device. Because the essential configuration of this embodiment is the same as that of the fourth embodiment previously described, configurative elements common to the fourth embodiment are denoted by the same symbols as before and are not described, FIG. 16 depicts a state of looking downward from above onto the detection surface 2a of the sensor unit 2.

In the sixth embodiment, the description uses an example of input in which the number of input points is two, for example, as the input method allowed by the content. In the case of two-point input being performed with one hand, the user brings the hand H near so that the palm surface of the hand is substantially parallel to the detection surface 2a of the sensor unit 2 composed of the touch panel, as shown in FIG. 16, for example. This results in cases in which the sensor unit 2 detects, as the detected objects, detection points D1, D2, D in a plurality of locations composed of the fingertips, the palm of the hand, and other parts in close proximity.

The weighted correction values in this case are set so as to increase the size of the detected objects that of the plurality of detected objects are positioned farther toward the outer edges than the detected objects that of the plurality of detected objects are positioned in the middle. The detected object specifying unit 8 thereby specifies two points: the fingertip (e.g. the thumb) corresponding to the detection point D1 and the fingertip (e.g. the middle finger) corresponding to the detection point D2; as detected objects to be preferentially selected. In this specifying, the weighted correction values preferably include information established in advance so that, among the multiple detection points detected by the sensor unit 2, the detection points corresponding to the tip of the thumb and the tip of the index finger are specified as the detected objects to be preferentially selected.

The controller 3 then sets the detection points D1, D2, which correspond to the fingertips specified as the detected objects to be preferentially selected, as two input points Ds1, Ds2 designated by the user.

As described above, the weighted correction values include information for specifying, as the detected objects to be preferentially selected, the detected objects that of the plurality of detected objects are positioned farther toward the outer edges than the detected objects that of the plurality of detected objects are positioned in the middle, when a plurality of detected objects in proximity to each other are detected. According to this configuration, when the user attempts to designate two points on the detection surface 2a of the sensor unit 2 with two fingers (the thumb and middle finger, for example) of one hand and the user's five fingers and palm of the hand are detected as detected objects, the fingertips of the user's thumb and middle finger are readily specified as the detected objects to be preferentially selected.

### <Seventh Embodiment>

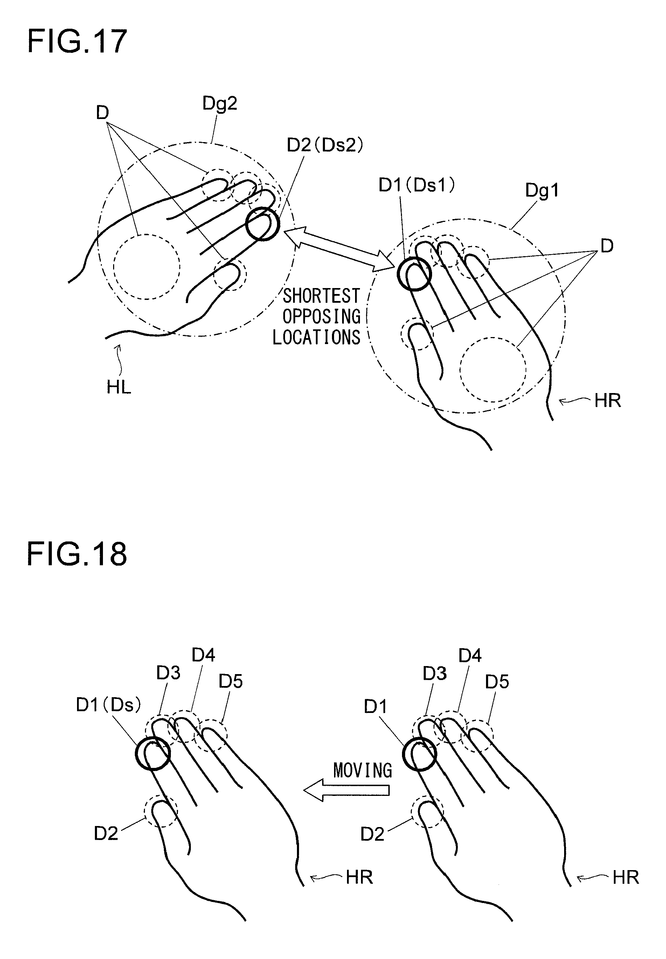

Next, the configuration of an input device of a seventh embodiment of the present invention is described using FIG. 17. FIG. 17 is a descriptive drawing of the weighted correction process of the input device. Because the essential configuration of this embodiment is the same as that of the fourth embodiment previously described, configurative elements common to the fourth embodiment are denoted by the same symbols as before and are not described. FIG. 17 omits a depiction of the detection surface 2a of the sensor unit 2, and depicts a state of looking downward from above onto the detection surface 2a of the sensor unit 2, similar to FIGS. 15 and 16.

In the seventh embodiment, the description uses an example of input in which the number of input points is two, for example, as the input method allowed by the content. In the case of two-point input being performed with both the right and left hands, the user brings the right hand HR and the left hand HL near so that the palm surfaces of the hands are substantially parallel to the detection surface 2a of the sensor unit 2 composed of the touch panel, as shown in FIG. 17, for example. This results in cases in which the sensor unit 2 detects, as the detected objects, detection points D1, D2, D in a plurality of locations composed of the fingertips, the palm of the hand, and other parts in close proximity. Furthermore, there are cases in which the sensor unit 2 detects a group Dg1 of detection points in a plurality of locations corresponding to the right hand HR, and a group Dg2 of detection points in a plurality of locations corresponding to the left hand HL, as groups of detection points that move in the same direction.

The weighted correction values in this case are set so that of the plurality of detected objects that correspond to the two groups Dg1, Dg2 of detection points, the largest are the detected objects positioned in locations where the groups substantially face each other and locations where the distance between the groups Dg1, Dg2 of detection points is shortest. The detected object specifying unit 8 specifies two points as the detected objects to be preferentially selected: the fingertip (the index finger of the right hand, for example) corresponding to the detection point D1 included in the group Dg1 of detection points associated with the right hand HR, and the fingertip (the index finger of the left hand, for example) corresponding to the detection point D2 included in the group Dg2 of detection points associated with the left hand HL. The controller 3 then sets the detection points D1, D2, which correspond to the fingertips specified as the detected objects to be preferentially selected, as two input points Ds1, Ds2 designated by the user.

As described above, the weighted correction values include information for specifying, as the detected objects to be preferentially selected, detected objects that, of the plurality of detected objects corresponding to the two groups Dg1 Dg2 of detection points, are positioned in locations where the groups substantially face each other and locations where the distance between the groups Dg1, Dg2 of detection points is shortest, when two groups of pluralities of detected objects in proximity to each other are detected. According to this configuration, when the user attempts to designate two points on the detection surface 2a of the sensor unit 2 with the index fingers, for example, of both hands and the user's five fingers and palms of both hands are detected as detected objects, the index fingers, which of the five fingers of the user's two hands are the closest together, are readily specified as the detected objects to be preferentially selected.

### <Eighth Embodiment>

Next, the configuration of an input device of an eighth embodiment of the present invention is described using FIG. 18. FIG. 18 is a descriptive drawing of the weighted correction process of the input device. Because the essential configuration of this embodiment is the same as that of the fourth embodiment previously described, configurative elements common to the fourth embodiment are denoted by the same symbols as before and are not described. FIG. 18 omits a depiction of the detection surface 2a of the sensor unit 2, and depicts a state of looking downward from above onto the detection surface 2a, similar to FIGS. 15 and 16.

In the eighth embodiment, the description uses an example of drag input in which the number of input points is one; i.e., a case in which the input point moves, for example, as the input method allowed by the content. In the case of drag input, the user brings the hand H near so that the palm surface of the hand is substantially parallel to the detection surface 2a of the sensor unit 2 composed of the touch panel, and moves the hand in an arbitrary direction, as shown in FIG. 18, for example. This results in cases in which the sensor unit 2 detects, as the detected objects, detection points D1 to D5 in a plurality of locations composed of the five fingertips moving with substantially the same timing, in substantially the same direction, and at substantially the same speed.

The weighted correction values include information corresponding to temporal shifting of the detected objects. The weighted correction values in this case are set so that of the plurality of detected objects corresponding to the detection points D1 to D5, the detected object positioned in the lead in the movement direction is larger. The detected object specifying unit 8 thereby specifies the fingertip (the index finger, for example) corresponding to the detection point D1 as the detected object to be preferentially selected. The controller 3 then sets the detection point D1, which corresponds to the fingertip specified as the detected object to be preferentially selected, as the input point Ds of the drag input by the user.

As described above, the weighted correction values include information corresponding to temporal shifting of the detected objects. According to this configuration, it is possible to perform a weighted correction that also corresponds to the temporal shifting of the relative positional relationships of a plurality of detected objects. Therefore, it is possible to make it unlikely that parts not intended by the user would be specified as a detected object even when a plurality of detected objects shift.

The weighted correction values also include information for specifying the detected object that of the plurality of detected objects is positioned in the lead in the shifting direction as the detected object to be preferentially selected, when a plurality of detected objects shifting with substantially the same timing, in substantially the same direction, and at substantially the same speed are detected. According to this configuration, when the user moves the fingertip of the index finger, for example, while designating a single point on the detection surface 2a of the sensor unit 2 with that finger and the user's five fingers and palm of the hand are detected as detected objects, the user's index finger is readily specified as a detected object to be preferentially selected.

### <Ninth Embodiment>

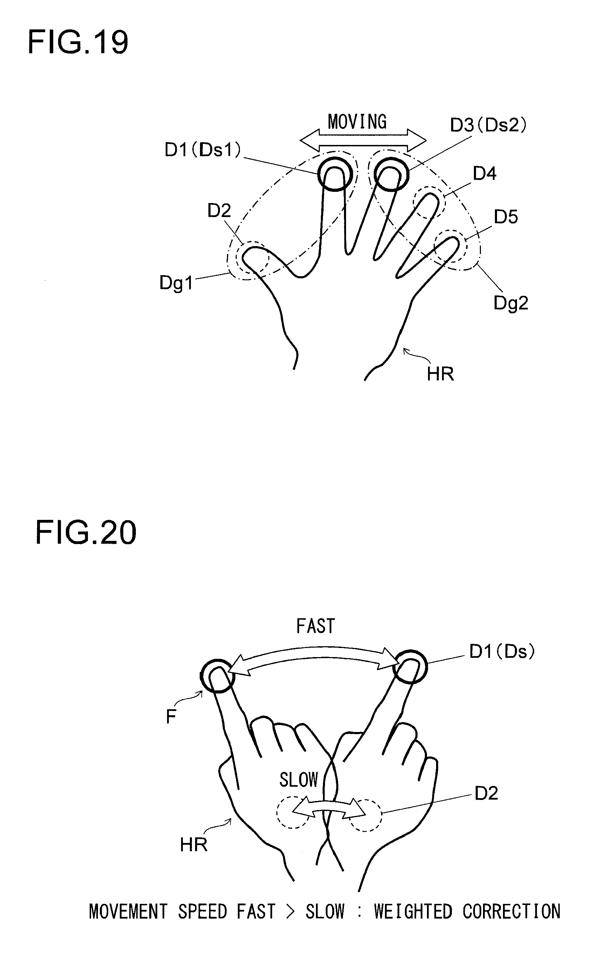

Next, the configuration of an input device of a ninth embodiment of the present invention is described using FIG. 19. FIG. 19 is a descriptive drawing of the weighted correction process of the input device. Because the essential configuration of this embodiment is the same as that of the fourth embodiment previously described, configurative elements common to the fourth embodiment are denoted by the same symbols as before and are not described. FIG. 19 omits a depiction of the detection surface 2a of the sensor unit 2, and depicts a state of looking downward from above onto the detection surface 2a of the sensor unit 2, similar to FIGS. 15 and 16.

In the ninth embodiment, the description uses an example of pinch-in or pinch-out input in which the number of input points is two; i.e., a case in which two input points move, for example, as the input method allowed by the content. In the case of pinch-in or pinch-out input, the user moves two fingers (the index finger and middle finger, for example) of the right hand HR so that the respective fingertips draw together or move apart, as shown in FIG. 19. This results in cases in which the sensor unit 2 detects a plurality of detection points D1 to D5 composed of five fingertips moving in different directions with substantially the same timing, as detected objects. There are also cases in which the sensor unit 2 detects a group Dg1 of detection points in a plurality of locations corresponding to the index finger (D1) and thumb (D2), and a group Dg2 of detection points in a plurality of locations corresponding to the middle finger (D3), ring finger (D4) and little finger (D5).

The weighted correction values in this case are set so that of the plurality of detected objects corresponding to the two groups Dg1, Dg2 of detection points, the detected objects that are positioned in locations the shortest distance apart from each other are larger. The detected object specifying unit 8 thereby specifies the fingertip (e.g. the index finger) corresponding to the detection point D1 included in the detection point group Dg1, and the fingertip (e.g. the middle finger) corresponding to the detection point D3 included in the detection point group Dg2, as detected objects to be preferentially selected. The controller 3 then sets the detection points D1, D2 corresponding to the fingertips specified as detected objects to be preferentially selected as input points Ds1, Ds2 of the two-point pinching in or pinching out by the user.

As described above, the weighted correction values include information for specifying, as the detected objects to be preferentially selected, the detected objects positioned in locations the shortest distance apart from each other from among the pluralities of detected objects corresponding to the two groups Dg1, Dg2 of detection points, when two groups of a plurality of detected objects are detected to be shifting with substantially the same timing in different directions towards each other. According to this configuration, when the user moves the fingertips of the index finger and middle finger of one hand, for example, in different directions while designating two points on the detection surface 2a of the sensor unit 2 with these fingers and the user's five fingers and palm of the hand are detected as detected objects, the user's index finger and middle finger are readily specified as detected objects to be preferentially selected.

### <Tenth Embodiment>

Next, the configuration of an input device of a tenth embodiment of the present invention is described using FIG. 20. FIG. 20 is a descriptive drawing of the weighted correction process of the input device. Because the essential configuration of this embodiment is the same as that of the fourth embodiment previously described, configurative elements common to the fourth embodiment are denoted by the same symbols as before and are not described. FIG. 20 omits a depiction of the detection surface 2a of the sensor unit 2, and depicts a state of looking downward from above onto the detection surface 2a of the sensor unit 2, similar to FIGS. 15 and 16.

In the tenth embodiment, the description uses an example of drag input in which the number of input points is one; i.e., a case in which the input point moves, for example, as the input method allowed by the content. In the case of drag input, the user brings a fingertip F (e.g. the index finger) of the hand H near the detection surface 2a of the sensor unit 2 composed of the touch panel, for example, and moves the finger so as to draw an arc, for example, as shown in FIG. 20. This results in cases in which the sensor unit 2 detects, as the detected objects, detection points D1, D2 in a two locations moving with substantially the same timing, in substantially the same direction, and at different speeds.

The weighted correction values in this case are set so that of the two detected objects corresponding to the detection points D1, D2 of the two locations, the detected object that shifts with the faster speed is larger. The detected object specifying unit 8 thereby specifies the fingertip F (e.g. the index finger) corresponding to the detection point D1 having the faster movement speed as the detected object to be preferentially selected. The controller 3 then sets the detection point D1, which corresponds to the fingertip F specified as the detected object to be preferentially selected as the input point Ds of the drag input by the user.

As described above, the weighted correction values include information for specifying, as the detected object to be preferentially selected, the detected object the shifts the fastest among the plurality of detected objects when a plurality of detected objects are detected to be shifting with substantially the same timing, in substantially the same direction, and at different speeds. According to this configuration, when the user moves the fingertip of the index finger, for example, so as to draw an arc centered on the wrist or elbow while designating a single point on the detection surface 2a of the sensor unit 2 with that finger and the user's fingertip and palm of the hand are detected as detected objects, the user's index finger is readily specified as the detected object to be preferentially selected.

### <Eleventh Embodiment>

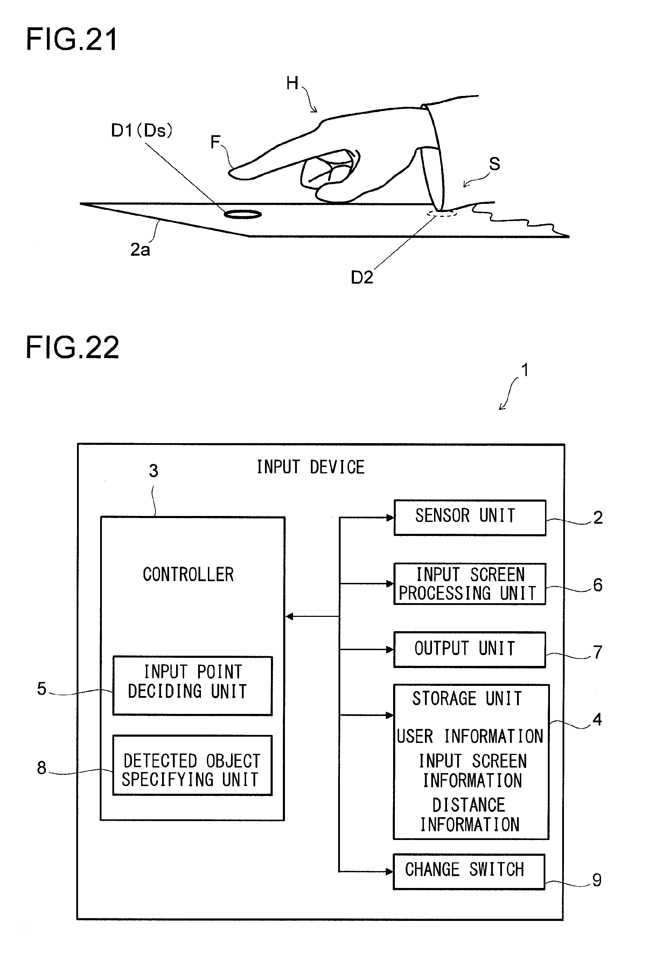

Next, the configuration of an input device of an eleventh embodiment of the present invention is described using FIG. 21. FIG. 21 is a descriptive drawing of the weighted correction process of the input device. Because the essential configuration of this embodiment is the same as that of the fourth embodiment previously described, configurative elements common to the fourth embodiment are denoted by the same symbols as before and are not described.

In the eleventh embodiment, the description uses an example of tap input in which the number of input points is one, for example, as the input method allowed by the content. In the case of tap input, the user brings a fingertip F (e.g. the index finger) of the hand H near the detection surface 2a of the sensor unit 2 composed of the touch panel, as shown in FIG. 21, for example. This results in cases in which the sensor unit 2 detects a plurality of locations including the fingertip F and sleeve S of clothing as detected objects. At this time, a detection point D1 corresponding to the fingertip F and a detection point D2 corresponding to the sleeve S are detected on the detection surface 2a.

The weighted correction values in this case are set so as to increase as the detected objects move further upward away from the detection surface 2a, similar to the fourth embodiment. The detected object specifying unit 8 thereby specifies the fingertip F as the detected object to be preferentially selected, and the controller 3 sets the detection point D1 corresponding to the fingertip F as the input point Ds of the drag input by the user.

When the fingertip F is then brought closer to the detection surface 2a, the sleeve S sometimes comes in contact with the detection surface 2a before the fingertip F as shown in FIG. 21. The weighted correction values in this case are set so that for a predetermined interval, determinations associated with the sleeve S coming in contact with the detection surface 2a are invalid, the sleeve S being a detected object other than the input point Ds corresponding to the fingertip F that is the detected object to be preferentially selected. The predetermined interval during which the determination associated with the sleeve S coming in contact with the detection surface 2a is invalidated is a time duration from the contact of the sleeve S with the detection surface 2a until the contact of the fingertip F, set in advance and stored in the storage unit 4 or the like and accounting for common human actions. The detected object specifying unit 8 thereby continues to specify the fingertip F as the detected object to be preferentially selected.

As described above, the weighted correction values include time duration information for invalidating for a predetermined interval determinations associated with contact on the detection surface 2a of the sensor unit 2 by a detected object other than the detected object to be preferentially selected. According to this configuration, it is possible to suppress erroneous detections when a sleeve S comes in contact with the detection surface 2a before the user's fingertip F after the user's fingertip F has been specified as the detected object to be preferentially selected.

Similarly, in cases in which the user takes the fingertip F away from the detection surface 2a and the sleeve S then comes away from the detection surface 2a after the fingertip F, the weighted correction values are set so that for a predetermined interval, determinations associated with the sleeve S coming away from the detection surface 2a are invalid, the sleeve S being a detected object other than the fingertip F that is the detected object to be preferentially selected. The detected object specifying unit 8 thereby continues to specify the fingertip F as the detected object to be preferentially selected.

### <Twelfth Embodiment>

Next, the configuration of an input device of a twelfth embodiment of the present invention is described using FIG. 22. FIG. 22 is a block diagram of the input device. Because the essential configuration of this embodiment is the same as that of the first and fourth embodiments previously described, configurative elements common to these embodiments are denoted by the same symbols as before and are not described.

The input device 1 of the twelfth embodiment can select one of two deciding modes: a compound mode, in which a single point on the detection surface 2a is decided corresponding to the distances between a plurality of detected objects, and a priority mode, in which a detected object to be preferentially selected is decided from among a plurality of detected objects. Therefore, the input device 1 of the twelfth embodiment comprises both the input point deciding unit 5 and the detected object specifying unit 8 as deciding units as shown in FIG. 22.

The input device 1 comprises a change switch 9. The user can use the change switch 9 to utilize either the compound mode or the priority mode. Based on the operation of the change switch 9 by the user, the controller 3 selects the deciding unit to use from between the input point deciding unit 5 (compound mode) and the detected object specifying unit 8 (priority mode).

According to this configuration, the user can arbitrarily select an input method for deciding an input point without the finger coming in contact with the detection surface 2a of the touch panel, and an input method that can make it unlikely for a part not intended by the user to be specified as a detected object. Therefore, the convenience of the input device 1 can be improved.

### <Thirteenth Embodiment>

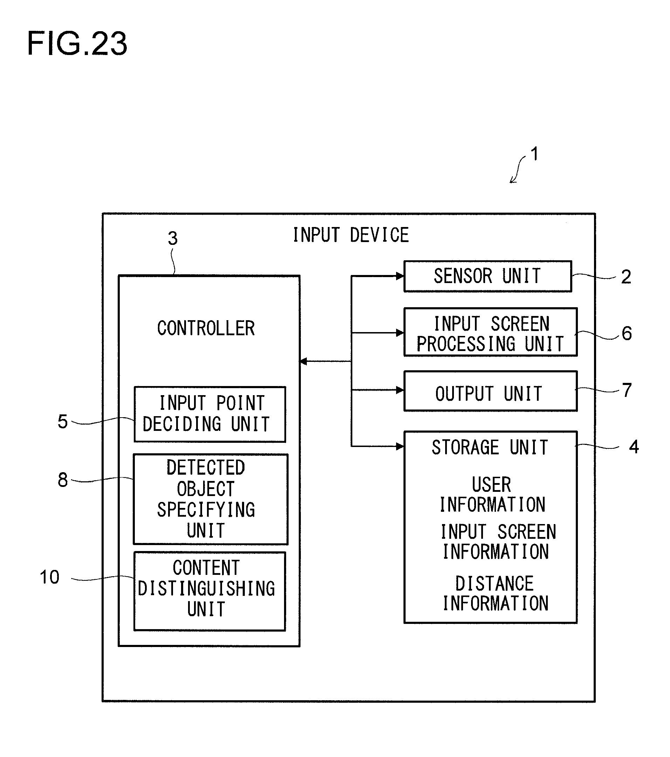

Next, the configuration of an input device of a thirteenth embodiment of the present invention is described using FIG. 23. FIG. 23 is a block diagram of the input device. Because the essential configuration of this embodiment is the same as that of the first and fourth embodiments previously described, configurative elements common to these embodiments are denoted by the same symbols as before and are not described.

The input device 1 of the thirteenth embodiment can select one of two deciding modes: a compound mode, in which a single point on the detection surface 2a is decided corresponding to the distances between a plurality of detected objects, and a priority mode, in which a detected object to be preferentially selected is decided from among a plurality of detected objects. Therefore, the input device 1 of the thirteenth embodiment comprises both the input point deciding unit 5 and the detected object specifying unit 8 as deciding units as shown in FIG. 23.

The input device 1 also comprises a content distinguishing unit 10. The content distinguishing unit 10 distinguishes content that the input device 1 will utilize. Based on information associated with the content distinguished by the content distinguishing unit 10, the controller 3 selects the deciding unit to use from between the input point deciding unit 5 (compound mode) and the detected object specifying unit 8 (priority mode).

According to this configuration, the input device 1 can automatically select an input method for deciding an input point without the finger coming in contact with the detection surface 2a of the touch panel, and an input method that can make it unlikely for a part not intended by the user to be specified as a detected object. Therefore, the convenience of the input device 1 can be improved.

Embodiments of the present invention are described above, but the range of the present invention is not limited to these embodiments, and various changes can be implemented within a range that does not deviate from the scope of the invention.

For example, in the priority mode as previously described, a plurality of the above embodiments may be combined and used together. In this case, the weighted correction is implemented multiple times to specify the detected object to be preferentially selected.

When the input device 1 selectively utilizes either one of the deciding modes including the compound mode and the priority mode as in the above embodiments, the selection method is not limited to the method using the change switch 9 or the content distinguishing unit 10. Another selection method may be used, such as a method of selecting according to the distance of the detected object, or a method of selecting according to the user's operation history (input errors, for example). Furthermore, a plurality of these selection methods may be combined and used together.

## Claims

1. An input device comprising:
a sensor unit for detecting an approach and/or contact of a detected object on a detection surface; and
a deciding unit for deciding, on the basis of the detected state of a plurality of detected objects detected by the sensor unit, a single point associated with input by the detected object;
the deciding unit deciding a single point associated with input by the detected object on the basis of at least one deciding mode, including a compound mode in which a single point on the detection surface is decided corresponding to the distances between the plurality of detected objects, and a priority mode in which the detected object to be preferentially selected is decided from among the plurality of detected objects.

2. The input device according to claim 1, wherein
in the compound mode, after the sensor unit has detected the plurality of detected objects not in contact with the detection surface and the sensor unit has detected that the distance between at least two of the plurality of detected objects is shorter than a first predetermined distance established in advance, the deciding unit decides an input point, which is a single point on the detection surface selected using detection points on the detection surface corresponding to the plurality of detected objects that are within a distance shorter than the first predetermined distance and are not in contact with the detection surface.

3. The input device according to claim 2, wherein
after the sensor unit has detected the plurality of detected objects not in contact with the detection surface and the sensor unit has detected that the distance between at least two of the plurality of detected objects is shorter than a second predetermined distance longer than the first predetermined distance and established in advance, the deciding unit gathers into a single point the detection points of the detection surface corresponding to the plurality of detected objects that are within a distance shorter than the second predetermined distance and are not in contact with the detection surface and sets this single point as an input point candidate, and when the sensor unit has detected that the distance between the plurality of detected objects that correspond to the input point candidate and that are not in contact with the detection surface is less than the first predetermined distance, the deciding unit decides the input point candidate of the detection surface to be the input point.

4. The input device according to claim 3, wherein
after the deciding unit has set the input point candidate, and the sensor unit has detected that the distance between the detection surface and the plurality of detected objects that correspond to the input point candidate and that are not in contact with the detection surface is shorter than a third predetermined distance established in advance, the deciding unit puts the position of the input point candidate into a locked state where the position does not change even when the detected objects corresponding to the input point candidate shift within a predetermined range established in advance in a space from the detection surface up to the third predetermined distance.

5. The input point according to claim 1, wherein
the input device comprises a storage unit that stores weighted correction values for specifying the detected object to be preferentially selected from among the plurality of detected objects in accordance with the relative positional relationship of the plurality of detected objects that have been detected simultaneously; and
when, in the priority mode, the sensor unit simultaneously detects the plurality of detected objects, the deciding unit applies a weighted correction using the weighted correction values to a detection signal outputted, and specifies the detected object to be preferentially selected from among the plurality of detected objects.

6. The input point according to claim 5, wherein
when the detected objects are detected in a far location and a near location relative to the detection surface of the sensor unit, the weighted correction values include information for specifying the farther detected object as the detected object to be preferentially selected..

7. The input point according to claim 5 or 6, wherein
the storage unit stores information associated with the user's dominant hand; and
when a plurality of detected objects are detected along a direction substantially parallel with the detection surface of the sensor unit, the weighted correction values include information for specifying the detected object corresponding to the user's dominant hand as the detected object to be preferentially selected.

8. The input point according to claim 5 to 7, wherein
when a plurality of detected objects in proximity to each other are detected, the weighted correction values include information for specifying, as the detected objects to be preferentially selected, the detected objects that of the plurality of detected objects are positioned farther toward the outer edge than the detected objects that of the plurality of detected objects are positioned in the middle.

9. The input point according to claim 5 to 8, wherein
when groups of pluralities of detected objects in proximity to each other are detected, the weighted correction values include information for specifying, as the detected objects to be preferentially selected, the detected objects that are positioned in locations where the groups substantially face each other and locations where the distance between the groups is shortest.

10. The input point according to claim 5 to 9, wherein
the weighted correction values include information corresponding to temporal shifting of the detected objects.

11. The input point according to claim 10, wherein
when a plurality of detected objects is detected to be shifting with substantially the same time, in substantially the same direction, and at substantially the same speed, the weighted correction values include information for specifying, as the detected object to be preferentially selected, the detected object that of the plurality of detected objects is positioned in the lead in the shifting direction.

12. The input point according to claim 10 or 11, wherein
when a plurality of groups of a plurality of detected objects in proximity to each other are detected to be shifting with substantially the same timing in different directions, the weighted correction values include information for specifying, as the detected objects to be preferentially selected, the detected objects positioned in locations where the distance between the plurality of groups is shortest.

13. The input point according to claim 10 to 12, wherein
when a plurality of detected objects is detected to be shifting with substantially the same time, in substantially the same direction, and at different speeds, the weighted correction values include information for specifying, as the detected object to be preferentially selected, the detected object that of the plurality of detected objects shifts the fastest.

14. The input point according to claim 10 to 13, wherein
the weighted correction values include time duration information for invalidating for a predetermined interval determinations associated with contact on or separation from the sensor unit by a detected object other than the detected object to be preferentially selected.
